Europäisches Patentamt

European Patent Office

Office européen des brevets

(11) Veröffentlichungsnummer: **0 301 366 B1**

(12) **EUROPÄISCHE PATENTSCHRIFT**

(45) Veröffentlichungstag der Patentschrift: **23.12.92**

(51) Int. Cl.5: **H02P 6/02**

(21) Anmeldenummer: **88111563.8**

(22) Anmeldetag: **19.07.88**

(54) **Verfahren zur Steuerung der Kommutierung von Spulen eines Gleichstrommotors.**

(30) Priorität: **28.07.87 DE 3724895**

(43) Veröffentlichungstag der Anmeldung:
**01.02.89 Patentblatt 89/05**

(45) Bekanntmachung des Hinweises auf die
Patenterteilung:
**23.12.92 Patentblatt 92/52**

(84) Benannte Vertragsstaaten:
**AT BE CH DE ES FR GB GR IT LI LU NL SE**

(56) Entgegenhaltungen:
**GB-A- 2 064 899**
**GB-A- 2 188 801**
**US-A- 4 584 505**

(73) Patentinhaber: **Deutsche Thomson-Brandt
GmbH
Postfach 2060
W-7730 Villingen-Schwenningen(DE)**

(72) Erfinder: **Mahr, Peter
Brandenburger Strasse 20
W-7819 Denzlingen(DE)**

## Beschreibung

Bekannte elektronisch kommutierte Gleichstrommotore, z.B. für den Einsatz in Magnetbandrecordern, sind mit mehreren Positionssensoren, Z.B. Hallelementen, ausgerüstet, die jeweils einem Spulenstrang zugeordnet sind. Dabei sind die Sensoren in einer festen räumlichen Anordnung in Bezug auf die Lage der Spulen ausgerichtet. In den Sensoren werden durch die Rotation Z.B. eines mehrpolige Permanentmagnete tragenden Rotors Signale erzeugt, durch die die jeweilige Rotorwinkellage erkannt wird. Von diesen Signalen wird die jeweilige Spulenkommutierung ausgelöst. Außerdem benötigen derartige Motore einen Frequenzgenerator, der Informationen, d.h. Signale, die proportional zur Motordrehzahl sind, liefert. Beide Informationen werden benötigt, um mittels elektronischer Schaltungen eine Motorregelung durchzuführen.

Auch sind Motore bekannt, bei denen mittels einer Lichtschranke in Verbindung mit mehreren, auf dem Rotor verteilten Strichmarkierungen, die in einer bestimmten Zuordnung zu den im Stator angeordneten kommutierbaren Spulen stehen, eine Motorsteuerung bewirkt wird (z.B. US-A-4 584 505).

Es ist Aufgabe der Erfindung, mit nur einem ortsfesten beliebig angeordneten Sensor die Kommutierungfolge eines derartigen Motors zu bewirken. Diese Aufgabe wird durch die im Anspruch 1 gekennzeichnete Erfindung gelöst. Weiterbildungen der Erfindung sind in den Unteransprüchen beschrieben.

Im Prinzip werden bei einem Motor, der Z.B. in einem Videorecorder eingesetzt werden kann, durch den von einem Sensor gelieferten Impuls, Z.B. einer Lichtschranke, zwei Informationen während einer Motorumdrehung abgeleitet, aus denen der Einsatz der Motorkommutierung ausgelöst wird. Die erste Information, nämlich der Impulsanfang, dient zur Erkennung der Rotorwinkellage, während die zweite Information, nämlich die Impulslänge, erzeugt Z.B. durch die Fensteröffnung der Lichtschranke, ein Maß für die Rotationsgeschwindigkeit ist.

Um den Kommutierungseinsatz für einen ersten Spulenstrang aus diesen Informationen zu bewirken, wird aus der jeweiligen Rotationsgeschwindigkeit ein Signalverlauf abgeleitet, der um einen zweiten, in einer Schaltung erzeugten Signalverlauf verlängert wird, an dessen Endpunkt die Kommutierung ausgelöst wird. Der zweite Signalverlauf ist dabei proportional zum ersten Signalverlauf, d.h. um einen bestimmten Faktor K mit dem ersten Signalverlauf verknüpft.

Wenn ein Motor anläuft, ist die Istsignaldauer des ersten Signales groß und die zweite Signaldauer ist ebenfalls proportional groß, da die Winkelgeschwindigkeit des Rotors entsprechend klein ist, womit die Zeit für den Einsatz der richtigen Kommutierung ebenfalls entsprechend groß ist. Hat der Motor seine Sollgeschwindigkeit erreicht, ist die Winkelgeschwindigkeit relativ groß, damit ist die erste Istsignaldauer kurz und die zweite Signaldauer, die proportional zur ersten Signaldauer ist, ebenfalls kurz, so daß der richtige Kommutierungspunkt bedingt durch die höhere Winkelgeschwindigkeit, schneller erreicht wird.

Die Verknüpfung zwischen Istsignaldauer und der zweiten, erzeugten Signaldauer, wird durch einen Proportionalitätsfaktor K bewirkt, der empirisch für einen Motor entsprechend der geometrischen Anordnung zwischen Sensor und Spulen ermittelt wird. Dieser Faktor kann z.B. festgelegt werden, indem für einen Motor eine minimale Stromaufnahme für Nenndrehzahl eingestellt wird. Auch ist es möglich, diesen Proportionalitätsfaktor so einzustellen, daß ein maximales Drehmoment vom Motor bei Nenndrehzahl abgegeben wird.

Für eine Motorsteuerung, d.h. für verschiedene Betriebszustände, wie Beschleunigen, Bremsen und Drehrichtungswechsel, kann der Faktor entsprechend verändert werden, so daß sich verschiedene Kommutierungseinsatzpunkte für diese Betriebszustände ergeben.

Durch die bisher beschriebene Anordnung wird jeweils der erste Einsatz einer Kommutierung festgelegt. Die Kommutierung der folgenden Spulenstränge kann z.B. durch Zähler erfolgen, oder aber auch erfindungsgemäß durch eine Kaskadierung des bisher beschriebenen Prinzipes erfolgen. Dabei wird vom Endpunkt der zweiten Signaldauer durch Kaskadierung weiterer proportional zur Istsignaldauer erzeugten Signaldauern, jeweils am Endpunkt dieser Signaldauern eine Kommutierung für die folgenden Spulenstränge ausgelöst. Die Steuerung für derartige kaskadierte Kommutierungspunktbestimmungen kann durch einen Mikroprozessor erfolgen.

Im folgenden soll die Erfindung anhand einer Figur beispielhaft beschrieben werden.

Fig. 1     zeigt ein Blockschaltbild für die Durchführung des Verfahrens zur Steuerung des Kommutierungszeitpunktes.

Fig. 2     zeigt Spannungsverläufe in Fig.1 bei verschiedenen Drehzahlen

Fig. 3     zeigt analog zu Fig. 2 Spannungsverläufe in Fig.1 bei gleicher Drehzahl und verschiedenen Kommutierungseinsatzpunkten

Fig. 4     ein Blockschaltbild für die Kommutierung mehrerer Spulenstränge durch Kaskadierung der Schaltung nach Fig.1.

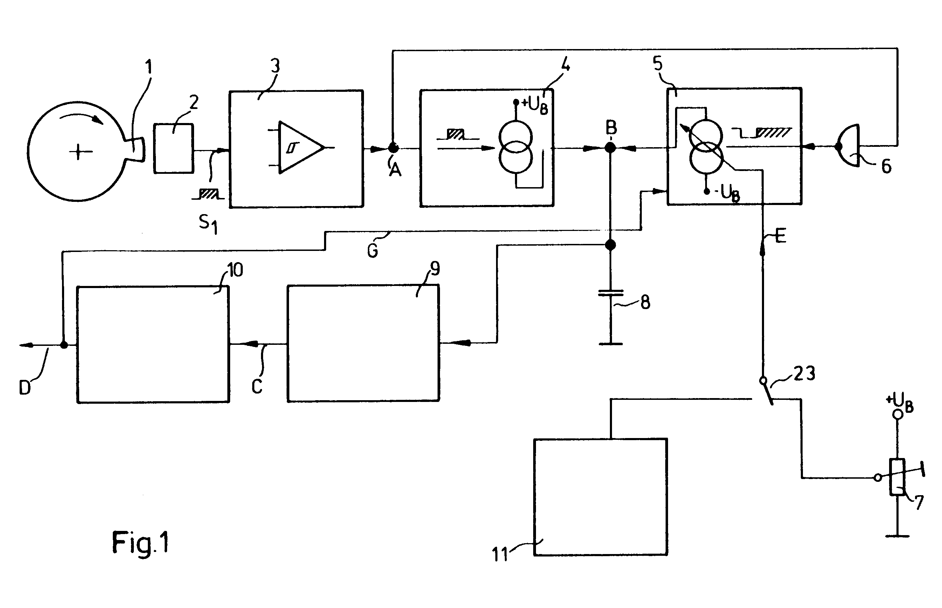

Fig. 1 zeigt in einem Blockschaltbild einen auf einer Motorachse befestigten Drehgeber 1, der in einem Sensor 2 ein Signal S1 erzeugt. Das Signal S1 hat eine von der Rotationsgeschwindigkeit abhängige Istsignaldauer T1, welche durch die Blende des Drehgebers 1, z.B. bei einer Lichtschranke, vorgegeben ist. Bei geringer Drehzahl ist T1 groß, bei großer Drehzahl klein. Durch die geometrische Anordnung zwischen Drehgeber 1 und den nicht dargestellten zu kommutierenden Motorspulen ist ein fester Winkel vorgegeben. Dieser Winkel ist frei wählbar und kann von Motor zu Motor variieren. Der Einsatz der Kommutierung, d.h. der Umschaltzeitpunkt von einem Spulenstrang auf den nächstfolgenden, ist also abhängig von dem Winkel, der sich aus dem Anfang von Signal S1 zum gewünschten optimalen Kommutierungspunkt t2 ergibt.

Es soll zum besseren Verständnis der Schaltung angenommen werden, daß die Istsignaldauer T1 von Signal S1 bei Nenndrehzahl kleiner ist, als die Zeit vom Anfang von Signal S1 bis zum Kommutierungszeitpunkt t2. Der Kommutierungszeitpunkt t2 liegt also zeitlich nach der Istzeitsignaldauer T1 und ist für eine gleichmäßige Kommutierung proportional abhängig von der Istsignaldauer T1 nach der Formel:

$$t2 = T1 + K \cdot T1$$

Der Proportionalitätsfaktor K ist für jeden Motor je nach Anforderung für den gewünschten Kommutierungszeitpunkt zu bestimmen. So kann dieser Faktor für geringste Stromaufnahme bei Nenndrehzahl oder auch für optimales Drehmoment bei Nenndrehzahl eingestellt werden.

Das Signal S1 mit der Istsignaldauer T1 wird von Sensor 2 dem Verstärker 3 zugeführt. Der Ausgang A von Verstärker 3 steuert eine Stromquelle 4 und über einen Inverter 6 eine Stromsenke 5. Die Ausgänge von Stromquelle 4 und Stromsenke 5 sind an einem Anschlußpunkt B zusammengeführt, der mit einem Kondensator 8 verbunden ist. Von der Stromquelle 4 wird während der Dauer von T1 der Kondensator 8 aufgeladen. Mit dem Ende von T1 stoppt die Aufladung und über die Stromsenke 5 wird eine Entladung für den Kondensator 8 eingeleitet. Der Entladevorgang, d.h. der Strom in der Stromsenke 5 ist über einen Steuereingang E einstellbar. Der Anfangspunkt der Ladung von Kondensator 8 wird durch einen dem Kondensator 8 parallelgeschalteten Nullspannungskomparator 9 erkannt, dessen Ausgang C bei Anfang der Ladung auf "high" geschaltet wird. Nachdem der Kondensator 8 durch die Stromsenke 5 wieder auf null Volt entladen worden ist, geht der Ausgang C vom Nullspannungskomparator 9 auf "low". Mit dem Nullspannungskomparator 9 ist eine Impulsformerschaltung 10 verbunden, die bei Erreichen der Nullvoltmarke einen Impuls D auslöst, der für die Einleitung der Kommutierung des ersten Spulenstranges des Motors durch Ansteuerung einer nicht dargestellten Schaltung ausgenutzt wird. Außerdem wird dieser Impuls dazu ausgenutzt, die Stromsenke 5 abzuschalten, damit Kondensator 8 nicht unter die Nullvoltmarke entladen wird. Dies geschieht über die Leitung G, welche den Ausgang von der Impulsformerschaltung 10 mit der Stromsenke 5 verbindet.

Die für die Kondensatoraufladung vorgesehene Stromquelle 4 liefert im aktiven Zustand einen durch die Dimensionierung vorgegebenen konstanten Strom. Die zur Entladung verwendete Stromsenke 5 dagegen ist über ihren Steueranschluß E in ihrer Stromstärke veränderbar. Es soll dabei ein linearer Zusammenhang zwischen dem Strom der Stromsenke 5 und einer am Steueranschluß E über Schalter 23 eingespeisten Steuergleichspannung gelten. Diese Steuergleichspannung wird mittels eines Potentiometers 7 von der Betriebsspannung +UB abgegriffen, wobei sich die Größe der abgegriffenen Spannung aus der jeweiligen geometrischen Anordnung zwischen dem Sensor 2 und den zu kommutierenden Spulen des Motores, sowie aus dem Ladestrom von Stromquelle 4 ergibt. Diese Spannung kann, wie schon erwähnt, z.B. auf geringsten Strom bei Nenndrehzahl oder auf maximales Drehmoment eingestellt werden.

Wird der Eingang E der Stromsenke 5 über Schalter 23 mit dem Ausgang von Mikroprozessor 11 verbunden, können mit Hilfe des Mikroprozessors, der mit einem D/A- Wandler versehen ist, verschiedenen Betriebszustände für den Motor eingestellt werden. So ist es z.B. möglich, Rechtslauf, Linkslauf, Beschleunigen und Bremsen über diesen Mikroprozessor 11 durch Veränderung des Kommutierungszeitpunktes einzugeben.

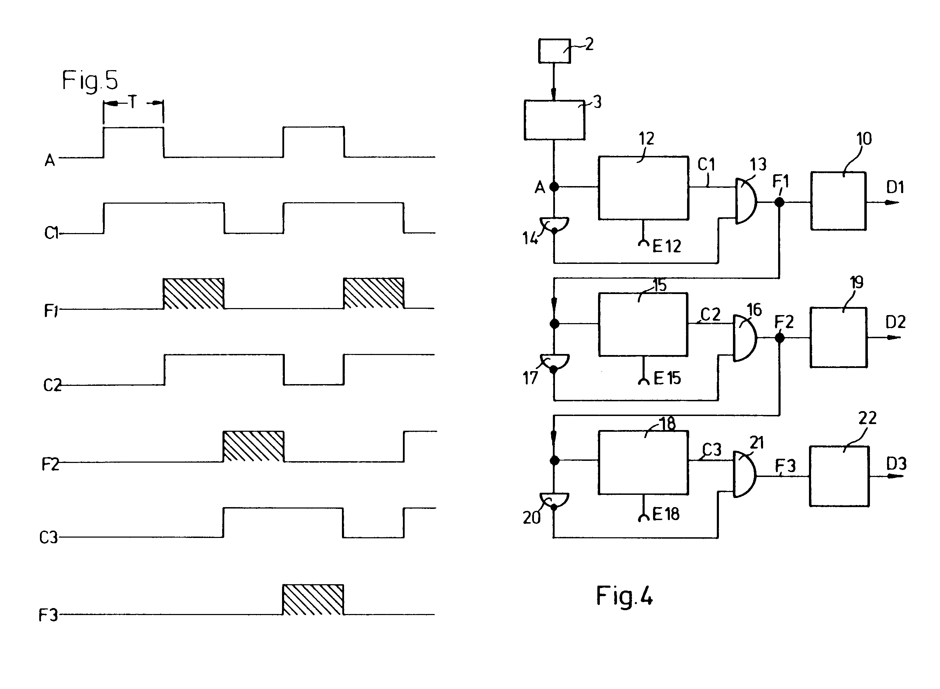

Die Kommutierung der weiteren Spulenstränge des Motors kann über Zählschaltungen vom Einsatzpunkt der beschriebenen Kommutierung des ersten Spulenstranges erfolgen oder aber durch eine Kaskadierung, wie in Fig. 4 beschrieben, durchgeführt werden. In der beschriebenen Schaltung nach Fig. 1 wird der Kommutierungszeitpunkt bewirkt durch Umsetzung der Signaldauer T1 sowie der zweiten proportional zur ersten Signaldauer T1 erzeugten Signaldauer T2 in Auf- und Entladevorgänge eines Kondensators 8. Es ist aber auch möglich, diese Signaldauern in Frequenzabläufe umzusetzen und den Kommutierungszeitpunkt mittels Zählschaltungen zu ermitteln.

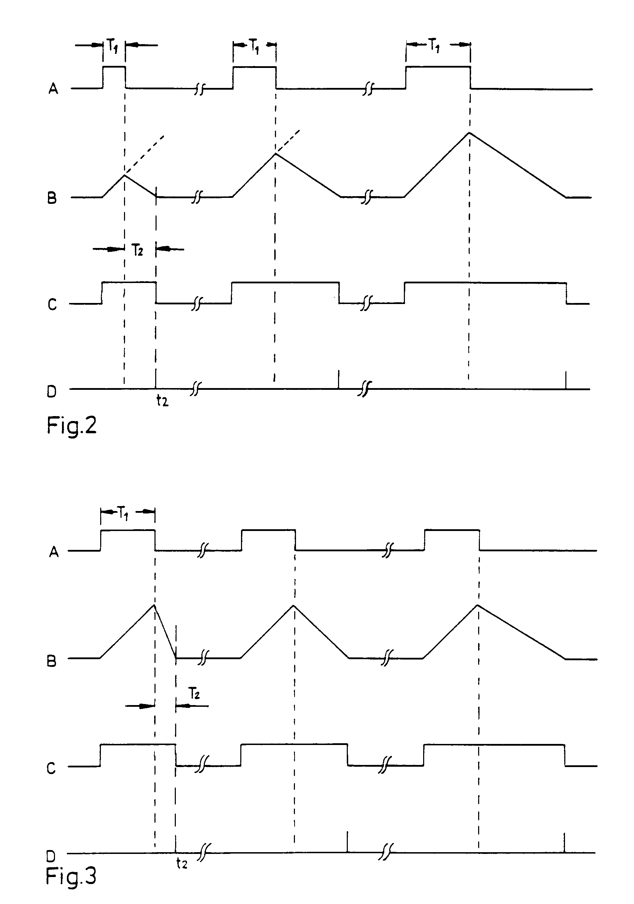

Fig. 2 zeigt Spannungsverläufe in Fig. 1 bei verschiedenen Drehzahlen eines Motors. Es sind drei verschiedene Drehzahlen dargestellt, wie sie z.B. durch eine Motorregelung mittels eines Frequenzgenerators auftreten können. Die kennzeichnenden Buchstaben A,B,C und D entsprechen den im Schaltbild angegebenen Punkten. A zeigt den Spannungsverlauf am Ausgang von Vorverstärker 3. Dieser Spannungsverlauf entspricht dem Signal S1 mit einer Signaldauer T1. Unter B sind die Auf- und Entladevorgänge von Kondensator 8 aufgezeigt. Während der Zeit T1 wird der Kondensator mit konstantem Strom aufgeladen, während im Anschluß an den Aufladevorgang sofort eine Entladung über die Stromsenke 5 erfolgt. Die Größe der Entladung in der Zeit T2 wird durch die Steuergleichspannung vorgegeben, die mittels Potentiometer 7 für einen optimalen Kommutierungsvorgang eingestellt ist. Es ist zu erkennen, daß das Verhältnis von Aufladung zu Entladung stets gleich ist (hier 2:3). Unter C ist der Signalverlauf am Ausgang von Nullspannungskomparator 9 aufgezeigt. Bei Beginn der Ladung schaltet der Nullspannungskomparator auf "high" und am Ende der Entladung, d.h. bei der Nullvoltmar-ke, schaltet der Komparator auf "low". D zeigt die Auslösung des Triggerimpulses am Ausgang der Impulsformerschaltung 10, der jeweils am Ende des Entladevorganges für die Einleitung der Kommutierung sowie für das Abschalten von Stromsenke 5 ausgelöst wird.

Fig. 3 zeigt analog zu Fig 2 Spannungsverläufe in Fig 1 bei gleicher Drehzahl des Motors. Die Kommutierung, d.h. die Auslösung von Impuls D wird jeweils durch unterschiedliche Entladung des Kondensators 8 verändert, wodurch verschiedene Betriebsbedingungen wie Beschleunigen, Bremsen oder Drehrichtungsänderung eingestellt werden können. Die unterschiedliche Entladung des Kondensators 8 wird zum Beispiel durch den Mikroprozessor 11 bewirkt, der mit dem Eingang E über Schalter 23 verbunden ist.

Fig. 4 zeigt ein Blockschaltbild für die Kommutierung mehrerer Spulenstränge durch Kaskadierung der Schaltung nach Fig. 1. Die Blöcke 12,15 und 18 beinhalten die in Fig. 1 beschriebenen Blöcke 4,5,6,8 und 9.

Sensor 2 liefert über Verstärker 3 die Istsignaldauer T1 an den Eingang von Block 12 und gleichzeitig an den Eingang eines Inverters 14. Die Ausgänge von Block 12 und von Inverter 14 werden einer Verknüpfungsschaltung 13 zugeführt, von der über Impulsformer 10 das Triggersignal D1 für einen ersten zu kommutierenden Spulenstrang abgegeben wird.

Das Ausgangssignal F1 von Verknüpfungsschaltung 13, welches am Endpunkt von T1 auf "high" geschaltet wird, gelangt an den Eingang des weiteren Blockes 15 sowie an Inverter 17. Deren Ausgänge wiederum einer weiteren Verknüpfungsschaltung 16 zugeführt werden, durch die in Verbindung mit Impulsformerschaltung 19 der Triggerimpuls D2 für die Kommutierung eines zweiten Spulenstranges ausgelöst wird. Das Ausgangssignal F2 von Verknüpfungsschaltung 16, welches mit Erreichen der Nullvoltmarke des Kondensators in Block 15 auf "high" geschaltet wird, wird jetzt einem weiteren Block 18 und einem weiteren Inverter 20 für die Kommutierung eines dritten Spulenstranges durch Impuls D3 über Verknüpfungsschaltung 21 und Impulsformerschaltung 22 zugeführt.

Weitere Anordnungen dieser Art (hier wurde die Kommutierung für 3 Stränge beschrieben) lassen eine Anpassung an verschiedene Motorstrangzahlen zu. Die einzelnen Arbeitspunkte für die Blöcke 12,15 und 18, d.h. die Steuerspannungen an den Blockeingängen E12, E15, E18 sind so zu legen, daß ein lückenloses Aneinanderreihen der Kommutierungsimpulse für die einzelnen Spulenstränge gewährleistet ist.

Neben dem Blockschaltbild sind in Fig. 5 die auftretenden Spannungsverläufe mit ihrer Zuordnung dargestellt.

**Patentansprüche**

1.  Verfahren zur Steuerung der Kommutierung für Spulen eines Gleichstrommotors mit ortsfestem Sensor, in dem während einer Rotorumdrehung ein Signal (S1) mit einer Istsignaldauer (T1) erzeugt wird, **dadurch gekennzeichnet**, daß die Istsignaldauer (T1) um eine proportional zur Istsignaldauer (T1) erzeugte zweite Signaldauer (K*T1 = T2) verlängert ist, und daß am Endpunkt (t2) der zweiten Signaldauer (T2) der Einsatz für die Kommutierung eines ersten Spulenstranges erfolgt.

2.  Verfahren nach Anspruch 1, **dadurch gekennzeichnet**, daß der Proportionalitätsfaktor (K) für optimalen Kommutierungseinsatz einstellbar ist.

3.  Verfahren nach Anspruch 1, **dadurch gekennzeichnet**, daß der Proportionalitätsfaktor (K) während des Motorlaufes für verschiedene Betriebszustände wie Beschleunigen, Bremsen und Drehrichtungswechsel veränderbar ist.

4.  Verfahren nach Anspruch 3, **dadurch gekennzeichnet**, daß der Proportionalitätsfaktor (K) durch einen Microprozessor steuerbar ist.

5.  Verfahren nach Anspruch 1, **dadurch gekennzeichnet**, daß der Einsatz der Kommutierung des zweiten und folgender Spulenstränge von dem Endpunkt (t2) der zweiten Signaldauer (T2) durch Kaskadierung weiterer proportional zur Istsignaldauer (T1) erzeugten Signaldauern (T3...TN) erfolgt.

**6.** Verfahren nach Anspruch 5, **dadurch gekennzeichnet**, daß die weiteren Signaldauern (T3...TN) durch einen Microprozessor steuerbar sind.

## Claims

**1.** A method of controlling commutation for coils of a DC motor with a stationary sensor, wherein a signal (S1) with an actual signal time (T1) is generated during a revolution of the rotor, characterised in that the actual signal time (T1) is extended by a second signal time (K*T1 = T2) produced proportionally to the actual signal time (T1), and that initiation of commutation of a first coil winding takes place at the end (t2) of the second signal time (T2).

**2.** The method of claim 1, characterised in that the proportionality factor (K) for optimum commutation initiation is adjustable.

**3.** The method of claim 1, characterised in that the proportionality factor (K) can be changed while the motor is running, for various operative states such as acceleration, braking and reversing the rotation.

**4.** The method of claim 3, characterised in that the proportionality factor (K) can be controlled by a microprocessor.

**5.** The method of claim 1, characterised in that commutation of the second and subsequent coil windings from the end (t2) of the second signal time (T2) is initiated by cascading further signal times (T3...TN) produced proportionally to the actual signal time (T1).

**6.** The method of claim 5, characterised in that the further signal times (T3...TN) can be controlled by a microprocessor.

## Revendications

**1.** Procédé pour la commande de la commutation pour les bobines d'un moteur à courant continu avec un capteur stationnaire dans lequel un signal (S1) avec une durée de signal effective (T1) est produit pendant une rotation du rotor, **caractérisé en ce** que la durée de signal effective (T1) est prolongée d'une seconde durée de signal produite (K*T1 = T2) proportionnellement à la durée de signal effective (T1) et que l'intervention pour la commutation d'une première ligne de bobines se fait à l'extrémité (t2) de la seconde durée de signal (T2).

**2.** Procédé selon la revendication 1, **caractérisé en ce** que le facteur de proportionnalité (K) est réglable pour l'intervention optimale de la commutation.

**3.** Procédé selon la revendication 1, **caractérisé en ce** que le facteur de proportionnalité (K) est variable pendant la marche du moteur pour différents états de marche tels que l'accélération, le freinage et le changement de sens de rotation.

**4.** Procédé selon la revendication 3, **caractérisé en ce** que le facteur de proportionnalité (K) peut être commandé par un microprocesseur.

**5.** Procédé selon la revendication 1, **caractérisé en ce** que l'intervention de la commutation de la seconde ligne de bobines et des lignes de bobines suivantes a lieu à partir du point d'extrémité (t2) de la seconde durée de signal (T2) par cascade d'autres durées de signal (T3...TN) produites proportionnellement à la durée de signal effective (T1).

**6.** Procédé selon la revendication 5, **caractérisé en ce** que les autres durées de signal (T3...TN) peuvent être commandées par un microprocesseur.

Fig.1

Fig.2

Fig.3

Fig.4

Fig.5